# EUROPEAN PATENT SPECIFICATION

(11) **EP 3 151 319 B1**
(45) Date of publication and mention of the grant of the patent: **21.08.2019**
(21) Application number: 15800645.2
(22) Date of filing: 17.07.2015
(51) Int. Cl.: H01M 4/62, H01M 4/58, H01M 10/0525

(54) **ELECTRODE MATERIAL, MANUFACTURING METHOD FOR SAME, AND LITHIUM BATTERY**
ELEKTRODENMATERIAL, HERSTELLUNGSVERFAHREN DAFÜR UND LITHIUMBATTERIE
MATÉRIAU D'ÉLECTRODE, SON PROCÉDÉ DE FABRICATION ET BATTERIE AU LITHIUM

(30) Priority: 30.05.2014 JP 2014112600
(43) Date of publication of application: 05.04.2017
(73) Proprietor: SEI Corporation, Tsu-shi, Mie 514-1118 (JP)
(72) Inventor: SAWAI, Takehiko, Tsu-shi Mie 514-1118 (JP); SAITO, Shinji, Tsu-shi Mie 514-1118 (JP); URAO, Kazunori, Tsu-shi Mie 514-1118 (JP); NAKAGAWA, Jun, Tsu-shi Mie 514-1118 (JP); HANAI, Kazuma, Tsu-shi Mie 514-1118 (JP)
(74) Representative: White, Duncan Rohan
(86) International application number: PCT/JP2015/070565
(87) International publication number: WO 2015/182794

(56) References cited:
- EP-A1- 0 621 236
- EP-A1- 2 202 829
- JP-A- H0 940 881
- JP-A- 2000 200 604
- JP-A- 2007 207 525
- JP-A- 2011 082 101
- JP-A- 2012 094 331
- JP-A- 2014 096 309
- JP-A- 2014 099 301
- US-A- 4 753 786
- US-A1- 2007 281 213

## Description

### TECHNICAL FIELD

The present invention relates to an electrode material for a lithium battery and a method for producing the electrode material and the lithium battery.

### BACKGROUND ART

A lithium battery whose positive and negative electrodes are formed by using an electrode material capable of occluding and releasing lithium ions has big problems which require that the lithium battery has a high-energy density and a high output (large current charge and discharge), is capable of keeping the above-described characteristics for many years in spite of repeated occlusions and releases of the lithium ions (long life), and has a high level of safety.

To solve these problems, various solutions have been proposed: (1) improvement of positive and negative electrode materials (patent document 1, 2), (2) improvement of current collection foil (patent document 3), and (3) improvement of separator (patent document 4).

Conventionally, the specific surface area of particles is increased by allowing particles of a negative electrode active substance to have a high capacity, decreasing the diameter thereof, and modifying the surfaces thereof. In addition, the areas of electrodes are increased by appropriately designing the electrodes. These attempts are intended to allow the lithium battery to have a high-energy density and a high output. Although the improvement of the properties of the electrode material has advanced, countermeasures for allowing the lithium battery to have a high level of safety and a long life are insufficient. Research and development for allowing the lithium battery to have a high-energy density are actively made. Investigations are conducted to allow a positive electrode material consisting of Ni-rich-Li (Ni/Mn/Co)O₂ to be charged at a high voltage and sulfur compounds having a theoretically high capacity density to be used for a positive electrode. Investigations are also conducted on the use of an alloy-based negative electrode having a semiconducting property and oxides thereof. Further, as new materials for the lithium battery, a lithium metal air battery is proposed.

The battery whose positive electrode is composed of a mixture of Li (Ni/Mn/Co) O₂ and LiFePO₄ is made public (non-patent document 1) as a new material for the positive electrode.

There is disclosed a surface modification method of subjecting carbon black to oxidation treatment at a temperature of 0 to 50 degrees C in a gas atmosphere in which the fluorine partial pressure is 266.6 to 3999 Pa and the oxygen partial pressure is not less than 6665 Pa (patent document 5).

### PRIOR ART DOCUMENT

### PATENT DOCUMENT

Patent document 1: Patent No. 3867030
Patent document 2: Patent No. 5118877
Patent document 3: WO2011/049153
Patent document 4: WO2013/128652
Patent document 5: Japanese Patent Application Laid-Open Publication No. 9-40881

EP-A-2202829 discloses a non-aqueous electrolyte battery including a negative electrode including metal lithium or a lithium alloy as a negative electrode active material, a positive electrode including a fluorinated graphite as a positive electrode active material, a separator provided between the positive electrode and the negative electrode, and a non-aqueous electrolyte. The concentration ratio [F]/[C] of fluorine atoms to carbon atoms on the surface of the fluorinated graphite is 1.0 or more and less than 1.8.

US-A-2007281213 discloses an electrochemical cell includes an anode, a cathode and an electrolyte operatively associated with the anode and the cathode. The cathode comprises a blend of a first electrochemically active fluorinated carbon material and one or more additional electrochemically active fluorinated carbon materials. The fluorinated carbon materials provide an electrochemical cell voltage characteristic that may be used to predict remaining energy capacity as the electrochemical cell discharges during service.

### NON-PATENT DOCUMENT

Non-patent document: (Company) Electrochemical Society Committee of Battery Division, Abstracts of 53rd Battery Symposium in Japan

### SUMMARY OF THE INVENTION

### PROBLEM TO BE SOLVED BY THE INVENTION

Although the above-described improvements enable the lithium battery to have a high-energy density in early days of the use thereof, it is difficult for the lithium battery to maintain the properties thereof in the repeated use thereof for many years .

In the case of a battery whose positive electrode contains a mixture of positive electrode active materials, a decrease in its capacity and output can be prevented in early days because the properties of the respective positive electrodes appear. But the battery has a problem that as charge and discharge cycles proceed, the active materials easily subjected to reactions are adversely affected by defects caused by nonuniform mixing of raw materials and the difference in the resistances of the active materials. As a result, the properties of the battery deteriorate.

The present invention has been made to deal with the above-described problems. It is an object of the present invention to provide an electrode material, for a lithium battery, which is capable of achieving a high-energy density and a high output and continuing its properties for many years, a method of producing the electrode material, and the lithium battery.

### MEANS FOR SOLVING THE PROBLEM

The invention provides an electrode material, a method and a lithium secondary battery as claimed in claims 1, 13 and 16 respectively.

### EFFECT OF THE INVENTION

The electrode material of the present invention allows a DC resistance of a battery to be low at discharge and charge times . Thereby the electrode material allows the battery to maintain a high-energy density after a cycle time finishes.

### BRIEF DESCRIPTION OF THE DRAWING

Fig. 1 shows hydrophilic treatment.
Fig. 2 shows the process of treating the surface of a positive electrode active material.
Fig. 3 shows a method of forming the positive electrode material as a complex by combining raw materials with each other .
Fig. 4 shows another method of forming the positive electrode material as a complex by combining raw materials with each other .

### MODE FOR CARRYING OUT THE INVENTION

The art of forming a complex by combining various conductive materials with lithium iron phosphate which is to be used as an electrode active material for a positive electrode by conducting a calcining method is disclosed by the present inventors (patent document 2). A layered type metal lithium oxide and a spinel type metal lithium oxide decompose at a temperature of about 500 degrees C and release oxygen. In addition, when a calcining temperature is increased up to the vicinity of 700 degrees C at which carbon atoms of the conductive material cleave in combining the conductive material with the layered type metal lithium oxide or the spinel type metal lithium oxide by calcining the mixture thereof, the carbon and the oxygen are combined with each other to form carbon dioxide. Therefore it is very difficult to form a complex by calcining the mixture of the positive electrode material containing the lithium oxide and the carbon-based conductive material. But by calcining the mixture of the carbon-based conductive material subjected to hydrophilic treatment in advance and the electrode active material in a specific condition in the presence of fluororesin, the present inventors could form the complex by combining the above-described two raw materials with each other . The present invention is based on this finding.

The carbon-based conductive material which can be used in the present invention is preferably at least one selected from among conductive carbon powder and conductive carbon fiber. The conductive carbon powder is preferably at least one selected from among acetylene black, Ketchen black, and powder containing graphite crystal.

Carbon fiber to be used in the present invention is conductive carbon fiber. It is preferable for the conductive carbon powder to contain at least one kind selected from among the carbon fiber, graphite fiber, vapor-grown carbon fiber, carbon nanofiber, and carbon nanotube. The diameter of the carbon fiber is favorably 5nm to 200nm and more favorably 10nm to 100nm. The length of the carbon fiber is favorably 100nm to 50µm and more favorably 1µm to 30µm.

The conductive carbon powder and the conductive carbon fiber may be used in combination. When the conductive carbon powder and the conductive carbon fiber are used in combination, it is preferable to set the mixing ratio of [conductive carbon powder/conductive carbon fiber = (2∼8)/(1∼3)] in mass ratio.

It is possible to mix 1 to 12 mass% and preferably 4 to 8 mass% of the carbon-based conductive material with an entire electrode material.

The carbon-based conductive material is subjected to hydrophilic treatment before the carbon-based conductive material is combined with the electrode active material. The carbon-based conductive material is essentially hydrophobic and thus does not disperse in water. Even though the carbon-based conductive material is mechanically mixed with water, the mixture separates into a carbon-based conductive material layer and a water layer in a few minutes. By subjecting the carbon-based conductive material to the hydrophilic treatment, the mixture does not separate into the carbon-based conductive material layer and the water layer, but the carbon-based conductive material disperses in the water. That is, the hydrophilic treatment improves the dispersibility of the hydrophobic carbon-based conductive material in the water. It is conceivable that by conducting the hydrophilic treatment, hydrophilic groups such as a -COOH group, a >Co group, and an OH group are formed on the surface of the carbon-based conductive material.

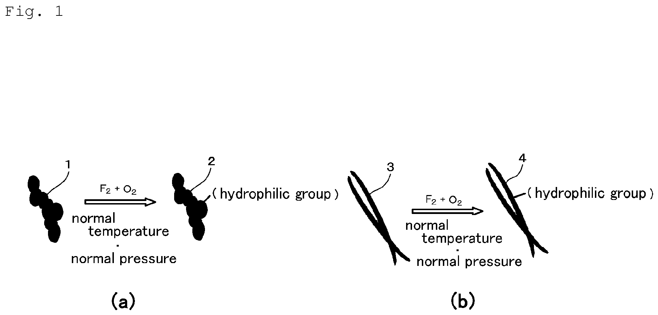

Fig. 1 shows the hydrophilic treatment. Fig. 1(a) shows an example of the conductive carbon powder. Fig. 1(b) shows an example of the conductive carbon fiber.

In the hydrophilic treatment, a conductive carbon powder 1 or a conductive carbon fiber 3 which are both the carbon-based conductive materials are brought into contact with a gas containing fluorine gas, preferably a gas containing the fluorine gas and oxygen gas to form a conductive carbon powder 2 or a conductive carbon fiber 4 having the hydrophilic groups such as the -COOH group, the >Co group, and the OH group formed on the surface thereof.

It is preferable to conduct the hydrophilic treatment by using the gas containing the fluorine gas in a condition in which fluorine atoms do not substantially remain on the surface of the carbon-based conductive material. The hydrophilic groups are formed by adjusting the mixing ratio between the fluorine gas and the oxygen gas and treatment conditions. For example, it is preferable to conduct the hydrophilic treatment at a normal temperature not more than 50 degrees C and at a normal pressure. In a case where the fluorine gas and the oxygen gas are present together, it is preferable to set the upper limit the volume ratio of the fluorine gas, namely, (volume of fluorine gas)/ (volume of fluorine gas + volume of oxygen gas) to 0.01. In a case where a large amount of the fluorine atoms is present on the surface of the carbon-based conductive material, the carbon-based conductive material is not hydrophilic any longer, but becomes water-repellent.

Examples of the positive electrode active materials which can be used in the present invention include layered type lithium-containing metal (layered cobalt, nickel or manganese) oxides, having a spinel structure, in which manganese has been replaced with nickel or a part of which has been replaced with nickel, and solid solutions of the lithium-containing metal oxides; lithium-containing metal phosphate compounds having an olivine structure, lithium-containing cobalt or manganese phosphorous oxides having the olivine structure; lithium-containing metal silicon oxides, and fluorides of the lithium-containing metal silicon oxides; and lithium-containing compounds such as sulfur.

As the layered type lithium-containing metal oxides, α-layered lithium-containing metal oxides are preferable. Li(Ni_{α}/Mn_{β}/Co_{γ})O₂(α+β+γ=1) is exemplified.

As the lithium-containing metal oxides having the spinel-type structure, spinel-type LiNi_{δ}Mn_{ε}O₄(δ+ε=2) is exemplified.

As the lithium-containing metal phosphate compounds having the olivine-type structure, olivine-type Li(Fe_{ζ}/Co_{η}/Mn_{θ}) PO₄ (ζ+η+θ=1) and Li₂(Fe_{ζ}/Co_{η}/Mn_{θ}) PO₄F (ζ+η+θ=1) are exemplified.

As the lithium-containing metal silicon oxides, Li(Fe_{ζ}/Co_{η}/Mn_{θ}) SiO₄ (ζ+η+θ=1) is exemplified.

As the fluorides of the lithium-containing metal silicon oxides, Li₂FePO₄·F is exemplified. As the lithium-containing compounds, LiTi₂(PO₄)₃ and LiFeO₂ are exemplified.

The positive electrode active material which can be used in the present invention is preferably a mixture of a first lithium compound which is at least one lithium compound selected from among the α-layered Li(Ni_{α}/Mn_{β}/Co_{γ})O₂(α+β+γ=1) and the spinel-type LiNi_{δ}Mn_{ε}O₄(δ+ε=2) and a second lithium compound which is at least one lithium compound selected from among the olivine-type Li(Fe_{ζ}/Co_{η}/Mn_{θ})PO₄(ζ+η+θ=1), the olivine-type Li₂(Fe_{ζ}/Co_{η}/Mn_{θ})PO₄F (ζ+η+θ=1), and the olivine-type Li(Fe_{ζ}/Co_{η}/Mn_{θ})SiO₄(ζ+η+θ=1). The reason the above-described positive electrode active materials are selected is because it is easy to subject these positive electrode active materials to surface treatment and combine these positive electrode active materials with the carbon-based conductive material by calcining a mixture of any of these positive electrode active materials and the carbon-based conductive material in the presence of the fluororesin and the metal oxide at a temperature not less than a temperature at which the fluororesin melts and starts thermal decomposition and at a temperature not more than a temperature at which the positive electrode active material does not thermally decompose.

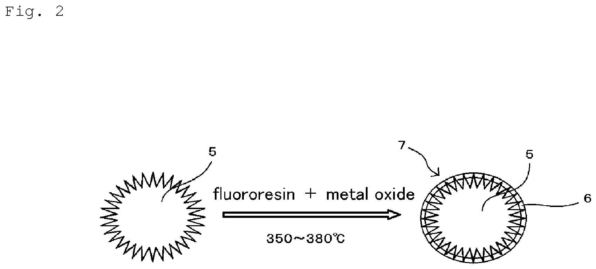

Fig. 2 shows the process of treating the surface of the positive electrode active material.

By calcining a positive electrode active material 5 in the presence of the fluororesin and the metal oxide at the temperature not less than the temperature at which the fluororesin melts and starts thermal decomposition and at the temperature not more than the temperature at which the electrode active material 5 does not thermally decompose, for example, at 350 to 380 degrees C, the fluororesin and the metal oxide react with each other on the surface of the electrode active material 5 to form a surface layer 6 consisting of metal fluorides and fluorocarbons ((CFₓ)ₙ). Owing to the presence of the fluorocarbons, an electrode active material 7 whose surface is conductive is obtained. Because the surface layer 6 is present on a surface crystal lattice site, it is possible to decrease the resistance of amanganese-basedmaterial contained in the untreated electrode active material 5. The surface layer 6 precipitates as an aluminum fluoride layer, a lithium fluoride layer or a fluorocarbon layer with the surface layer 6 covering the surface of the electrode active material 5.

As metal oxides or compounds generated from the metal oxides to be used in combination with the fluororesin, the elements of the third through sixth group of the periodic table and oxides and hydroxides of these elements are exemplified. Examples of preferable metals include aluminum, molybdenum, titanium, and zirconium. Aluminum is more favorable than the other metals. A preferable metal oxide is aluminum oxide shown by Al₂O₃.

The fluororesin which can be used in the present invention starts thermal decomposition at the temperature not more than the temperature at which the positive electrode active material does not thermally decompose. The temperature at which the positive electrode active material thermally decomposes is 350 to 380 degrees C. Thus the fluororesin which can be used in the present invention melts and starts thermal decomposition at a temperature not more than the above-described temperature range. The melting point of the fluororesin is a temperature at which a maximum endothermic peak is shown in a differential thermal analysis curve (temperature rise rate: five degrees C/minute). The thermal decomposition start temperature is a temperature at which a mass decrease curve (temperature rise rate: five degrees C/minute in air) of 5% is shown in a thermobalance.

As concrete examples of the fluororesins which start thermal decomposition in the range of 350 to 380 degrees C, polyvinylidene fluoride resin (PVDF) (melting point: 172 to 177 degrees C, start temperature of thermal decomposition: 350 degrees C), ethylene-tetrafluoroethylene copolymer resin (ETFE, melting point: 270 degrees C, start temperature of thermal decomposition: 350 to 360 degrees C), and polyvinyl fluoride (PVF, melting point: 200 degrees C, start temperature of thermal decomposition: 350 degrees C) are listed. It is possible to use tetrafluoroethylene-hexafluoropropylene copolymer resin (FEP, melting point: 255 to 265 degrees C, start temperature of thermal decomposition: 400 degrees C) and a tetrafluoroethylene-perfluoroalkyl vinyl ether copolymer (PFA, melting point: 300 to 310 degrees C, start temperature of thermal decomposition: 350 to 380 degrees C) in combination with the fluororesins which start thermal decomposition in the range of 350 to 380 degrees C.

Of these fluororesins, the polyvinylidene fluoride resin is preferable because it melts and decomposes in a wide temperature range and easily reacts with aluminum oxide.

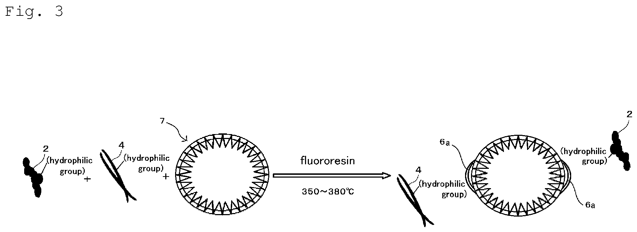

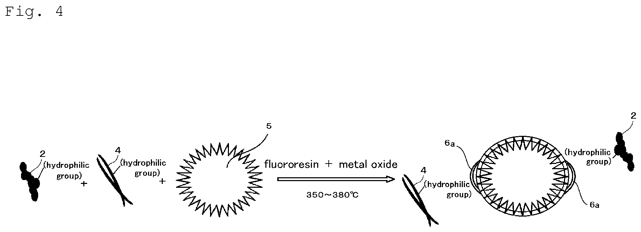

Figs. 3 and 4 show the method of forming the positive electrode material as a complex by combining raw materials with each other.

Fig. 3 shows an example of the method of forming the positive electrode material as the complex by calcining a mixture of carbon-based conductive materials 2 and 4 subjected to hydrophilic treatment and an electrode active material 7 consisting an untreated electrode active material 5 having a surface layer 6 formed on the surface thereof in the presence of the fluororesin at the temperature not less than the temperature at which the fluororesin melts and starts thermal decomposition and at the temperature not more than the temperature at which the positive electrode active material 5 does not thermally decompose. The above-described fluororesins can be used as the fluororesin. By calcining the mixture at a temperature not more than a temperature at which the untreated electrode active material 5 starts thermal decomposition, a part of fluorine atoms contained in the molecular structure of the polyvinylidene fluoride react with aluminum atoms of the aluminum oxide molecules to form aluminum fluoride . Other part of the fluorine atoms forms a fluorocarbon layer 6a which imparts conductivity to the surface layer 6. In this manner, the electrode active material 7 and the carbon-based conductive materials 2 and 4 are combined with each other to form the complex.

Fig. 4 shows an example in which the untreated electrode active material 5 is surface-treated and combined with the carbon-based conductive material simultaneously. More specifically, the positive electrode material is formed as the complex by calcining a mixture of the carbon-based conductive materials 2 and 4 subjected to the hydrophilic treatment and the untreated electrode active material 5 in the presence of the fluororesin and the metal oxide or a compound generated from the metal oxide at the temperature not less than the temperature at which the fluororesin melts and starts thermal decomposition and at the temperature not more than the temperature at which the positive electrode active material 5 does not thermally decompose. The above-described fluororesins can be used as the fluororesin.

As the method of forming the positive electrode material as the complex by combining the above-described raw materials, it is possible to adopt either a method of mixing the raw materials including the carbon-based conductive material subjected to the hydrophilic treatment and the electrode active material with each other in a fluororesin aqueous solvent or an organic solvent emulsion and thereafter calcining the mixture of the above-described raw materials after the mixture is dried or a dry process of mixing the raw materials with one another in the form of powder and calcining the mixture so as to form the complex. The dry process allows the untreated electrode active material 5 to be surface-treated and combined with the carbon-based conductive materials simultaneously.

The negative electrode active materials which can be used in the present invention include graphite, graphite having an amorphous carbon material layer or a carbon material layer, having a graphene structure, which is present on the surface thereof, graphite to which SiOₓ or SnOₓ has been added, and lithium titanate compounds such as Li₄Ti₅O₁₂. The carbon material layer having the graphene structure means one layer of a plain six-membered ring structure of sp²-connected carbon atoms. The amorphous carbon material layer means a six-membered ring structure three dimensionally constructed.

By calcining the mixture of any of the above-described negative electrode active material and the carbon-based conductive material subjected to the hydrophilic treatment in the presence of the fluororesin, a negative electrode active material is obtained as a complex of the raw materials. As the fluororesin and the carbon-based conductive material subjected to the hydrophilic treatment, it is possible to use the raw materials used to form the positive electrode active material as the complex by combining the raw materials with each other. The calcining temperature is set to not less than 600 degrees C, favorably not less than 1000 degrees C, and more favorably not less than 1100 to 1300 degrees C. Unlike amorphous carbon atoms, in the case of carbon atoms present on a highly crystalline graphite plane, it is necessary to set the calcining temperature to not less than 1000 degrees C to allow the bonds of the carbon atoms to be cleaved and chemical bonds to be made.

As in the case of the formation of the positive electrode as the complex, as the method of forming the negative electrode material as the complex by combining the above-described raw materials, it is possible to adopt either the method of mixing raw materials including the carbon-based conductive material subjected to the hydrophilic treatment and the electrode active material with each other in the fluorine water solvent or the organic solvent emulsion and thereafter calcining the mixture of the raw materials after the mixture is dried or the dry process of mixing the raw materials with one another in the form of powder and calcining the mixture so as to form the complex.

The method of producing the electrode material of the present invention is described below.

The method of producing the electrode material has (1) a step of subjecting the carbon-based conductive material to hydrophilic treatment with the carbon-based conductive material in contact with a gas containing fluorine gas, (2) a step of mixing the untreated electrode active material, the carbon-based conductive material subjected to the hydrophilic treatment, and the fluororesin with one another, and (3) a step of calcining the mixture of the above-described raw materials.

### (1) The step of subjecting the carbon-based conductive material to the hydrophilic treatment with the carbon-based conductive material in contact with the gas containing the fluorine gas

It is possible to hydrophilize the carbon-based conductive material by supplying the carbon-based conductive material to a reaction container, replacing the atmosphere inside the reaction container with the gas containing the fluorine gas, and leaving the contents of the reaction container at a room temperature for a few minutes. Whether the carbon-based conductive material has been hydrophilized can be determined by measuring a contact angle . As a simple method of determining whether the carbon-based conductive material has been hydrophilized, after the carbon-based conductive material is mixed with pure water, the mixture is left as it stands. It is possible to confirm that the carbon-based conductive material has been hydrophilized when the mixture does not separate into the layer of the carbon-based conductive material and the water layer, but the carbon-based conductive material has dispersed in the water.

### (2) The step of mixing the electrode active material, the carbon-based conductive material subjected to the hydrophilic treatment, and the fluororesin with one another

The electrode active material includes the untreated electrode active material and the electrode active material resulting from the surface treatment of the untreated electrode active material conducted by using the above-described method. A step of calcining the untreated electrode active material to be performed at a next step and a step of calcining the surface-treated electrode active material to be performed at a next step are different from each other.

As the method of mixing the electrode active material, the carbon-based conductive material, and the like with one another, it is possible to adopt both a wet mixing method of dispersing these materials in the aqueous solvent, mixing these materials with one another, and thereafter drying the mixture and a dry mixing method of using a mixing apparatus such as a rotary kiln, a ball mill, a kneader, and the like.

### (3) The process of calcining the mixture

In the calcining process, the mixture is processed into a complex. By calcining the mixture, the fluororesin mixed with the electrode active material and the carbon-based conductive material becomes conductive fluorocarbons which are generated on the surface of the electrode active material with the fluorocarbons in close contact with the carbon-based conductive material subjected to the hydrophilic treatment. Thereby the mixture is processed into the complex.

In the case of the electrode material to be used for the positive electrode, the electrode active material having the metal fluoride and the fluorocarbon formed on its surface is calcined in the presence of the fluororesin. On the other hand, the untreated electrode active material is calcined in the presence of the fluororesin and the metal oxide . The calcining temperature is set to the temperature not less than the temperature at which the fluororesin melts and starts thermal decomposition and to the temperature not more than the temperature at which the electrode active material does not thermally decompose.

In the case of the electrode material to be used for the negative electrode, as described above, the calcining temperature is set to not less than 600 degrees C, favorably not less than 1000 degrees C, and more favorably not less than 1100 to 1300 degrees C.

As necessary, the calcining process is followed by a pulverizing step of pulverizing the electrode material obtained by calcining the mixture of the raw materials. The electrode material is pulverized in consideration of the diameter of particles thereof which allows close packing thereof to be accomplished and the property of the electrode active material which composes a battery. For example, in the case of the lithium iron phosphate powder to be used as the electrode active material for the positive electrode, it is admitted that when the diameter of the powder is smaller than 50nm, an amorphous phase is generated in the olivine-type crystal thereof, which causes the capacity of the lithium battery to lower extremely. Therefore it is favorable to pulverize the lithium iron phosphate powder to be used for the positive electrode into a diameter of not less than 50nm. It is more favorable to pulverize the powder into a diameter of not less than 70nm and less than 100nm. In the case of a layered type lithium compound, it is preferable to pulverize the powder thereof into a diameter of 3 to 15µm.

In the case of the negative electrode material, it is admitted that as with the positive electrode material, miniaturized particles of the negative electrode material cause a decrease in the capacity of a lithium battery. The minimum diameter of the particles of the negative electrode material which is commercially available or being investigated on mass production is normally about 4µm. Thus it is favorable to pulverize the negative electrode material into a diameter of not less than 4µm and more favorable to pulverize it into a diameter of not less than 7µm and less than 20µm.

The above-described electrode materials, a binder, and the above-described conductive material are mixed with one another by using a dispersion solvent to form paste . Thereafter the paste is applied to the surface of a current collection foil and dried to form an active agent mixed agent layer. In this manner, the electrodes are obtained. An organic electrolytic solution is permeated into a group of electrodes wound or laminated one upon another between a positive electrode and a negative electrode via a separator or the group of electrodes is immersed in the organic electrolytic solution. In this manner, a lithium battery which repeatedly occludes and releases lithium ions is obtained.

As the current collection foil, it is possible to list foils of metals such as aluminum, copper, nickel, iron, stainless steel, and titanium. The current collection foil may be subjected to punching processing or drilling processing to form a hole having a projected portion. It is preferable to form a covering layer consisting of conductive carbon on the surface of the metal foil.

It is possible to use the current collection foil, subjected to the drilling processing, which has any of pyramidal, cylindrical, conical configurations and combinations of these configurations in its sectional configuration of the hole, having the projected portion, which has been formed through the current collection foil. The conical configuration is more favorable than other configurations in view of shot life of a processing speed and a processing jig and suppress the generation of the a front end portion of the hole having the projected portion of the current collection foil. It is preferable to form the hole having the projected portion by breaking through the current collection foil, because the hole having the projected portion improves a current collection effect. The hole having the projected portion formed by breaking through the current collection foil is superior to a through-hole formed through the current collection foil by punching processing or an irregularity formed by emboss processing in the charge and discharge of a large current in the case of lithium secondary battery and in durability against an internal short-circuit at a cycle time.

As the binder, it is possible to use materials physically and chemically stable in the atmosphere inside a battery. Thus it is possible to use fluorine-containing resin such as polytetrafluoroethylene, polyvinylidene fluoride, and fluororubber; and thermoplastic resin such as polypropylene, polyethylene, and the like. It is also possible to use acrylic resin materials and styrene·butadiene materials.

The separator has a function of electrically insulating a positive electrode and a negative electrode from each other and holding an electrolytic solution. As materials for the separator, it is possible to exemplify a film and fiber made of synthetic resin and inorganic fiber. As concrete examples thereof, it is possible to exemplify a polyethylene film, a polypropylene film, woven and nonwoven cloths made of these resins, and glass fiber, and cellulose fiber.

As an electrolytic solution in which the group of electrodes is immersed, it is preferable to use a nonaqueous electrolytic solution containing a lithium salt or an ion-conducting polymer .

As non-aqueous solvents in the nonaqueous electrolytic solution containing the lithium salt, ethylene carbonate (EC), propylene carbonate (PC), diethyl carbonate (DEC), dimethyl carbonate (DMC), and methyl ethyl carbonate (MEC) are listed.

As lithium salts dissolvable in the nonaqueous solvents, lithium hexafluorophosphate (LiPF₆), lithium tetrafluoroborate (LiBF₄), lithium trifluoromethanesulfonate (LiSO₃CF₄), and lithium bis(fluorosulfonyl) imide (LiSFI) are listed.

The lithium battery of the present invention is applicable to a lithium battery to be mounted on a car, a lithium ion capacitor, nonaqueous power generation elements, and the like.

The lithium battery to be mounted on cars can be produced in various configurations such as a cylindrical configuration, a square configuration, a laminate type, and the like. In addition, the lithium battery to be mounted on cars is applicable to different uses such as specifications of cars, a starter, an ISS, an HEV, a PHEV, an EV, and the like.

### EXAMPLES

### Example 1

As a positive electrode active material for a lithium battery, a compound of Li(Ni_{1/3}/Mn_{1/3}/Co_{1/3})O₂ was prepared. The average particle diameter of the compound was 5 to 8pm. Thereafter acetylene black and carbon nanotube having a diameter of 15nm and a length of 2µm were prepared as a conductive material. 60 parts by mass of the acetylene black and 40 parts by mass of the carbon nanotube were supplied to a reaction container made of stainless steel. Thereafter the inside of the reaction container was evacuated. A mixture gas of 99.95 percent by volume of oxygen gas mixed with 0.05 percent by volume of fluorine gas was introduced into the reaction container under vacuum. After the mixture gas was left for a few minutes, the inside of the reaction container was evacuated. The evacuated gas was passed through an alumina reaction tube to prevent hydrogen fluoride gas from being discharged to the atmosphere. After argon gas was introduced into the reaction container, the reaction container was opened to take out the powder. To check whether the powder of the conductive material was hydrophilized, the powder of the conductive material was dispersed in water. As a result, it was confirmed that the powder of the conductive material did not separate from the water nor sank. The hydrophilic treatment can be conducted for each conductive material.

Thereafter the positive electrode active material and the hydrophilized carbon-based conductive material were combined with each other to form a complex. 95 parts by mass of the powder of the positive electrode active material, five parts by mass of the hydrophilized conductive material, one part by mass of Al₂O₃ powder, and three parts by mass of polyvinylidene fluoride powder were solidly mixed with one another by conducting the rotary kiln method. Thereafter the mixed powder was calcined at 370 degrees C to form a complex. The complex was pulverized to obtain a positive electrode material coated with AlF₃ having an average diameter of 10µm and fluorocarbon which imparts conductivity to the positive electrode active material.

As a binder, six parts by mass of the polyvinylidene fluoride was added to the positive electrode material obtained by conducting the above-described method. N-methylpyrrolidone was added to the mixture as a dispersion solvent. The mixture was kneaded to prepare a positive electrode mixed agent (positive electrode slurry). The slurry was applied to an aluminum foil having a thickness of 15µm to produce a positive electrode having a thickness of 160µm including the thickness of the aluminum foil.

To produce a negative electrode to be opposed to the positive electrode, 99 parts by mass of natural graphite coated with an amorphous carbon material, 99 parts by mass of artificial graphite coated with the amorphous carbon material, and one part by mass of hydrophilized carbon nanotube were mixed with one another. Thereafter the mixture was calcined at 700 degrees C by using polyvinylidene fluoride powder to form a complex. Thereafter 98 parts by mass of the complex negative electrode material was mixed with two parts by mass (mass ratio of solid content in solution) of a styrene·butadiene material (SBR) dissolved as a binder in a carboxymethyl cellulose (CMC) aqueous solution to prepare slurry. The slurry was applied to a copper foil having a thickness of 10µm to produce a negative electrode having a thickness of 100µm including the thickness of the copper foil.

The positive and negative electrodes were cut into a predetermined dimension respectively. Five sheets of the positive electrode and six sheets of the negative electrode were laminated one upon another by interposing a separator consisting of nonwoven cloth between the positive electrode and the negative electrode to form a group of electrodes.

After terminals were welded to the group of electrodes, the group of electrodes was wrapped with a laminate film to form a laminate type battery. An electrolytic solution was prepared by dissolving one mol/l of lithium hexafluorophosphate (LiPF₆) and one part by mass of vinylene carbonate in a solution consisting of a mixture of ethylene carbonate (EC), methyl ethyl carbonate (MEC), and dimethyl carbonate (DMC) . As the separator interposed between the positive and negative electrodes, nonwoven cloth, made of cellulose fiber, which has a thickness of 20µm was used. After the electrolytic solution was injected to a battery can, the laminate film was welded to the separator to seal the battery can. A produced lithium battery having a capacity of 3.7V-700mAh was initially charged.

### EXAMPLE 2

95 parts by mass of untreated positive electrode active material powder, one part by mass of the Al₂O₃ powder, and three parts by mass of the polyvinylidene fluoride powder were solidly mixed with one another by conducting the rotary kiln method. Thereafter the mixed powder was calcined at 370 degrees C and pulverized to obtain a positive electrode material coated with the AlF₃ having an average diameter of 10µm and the fluorocarbon which impart conductivity to the positive electrode active material.

The obtained positive electrode material and the hydrophilized carbon-based conductive material were combined with each other to form a complex. 95 parts by mass of the positive electrode active material powder, five parts by mass of the hydrophilized conductive material, and three parts by mass of the polyvinylidene fluoride powder were solidly mixed with one another by conducting the rotary kiln method. Thereafter the mixed powder was calcined at 370 degrees C to form a complex and pulverized to obtain a positive electrode material coated with the AlF₃ having an average diameter of 10µm and the fluorocarbon which impart conductivity to the positive electrode active material. By using the obtained positive electrode material, a positive electrode was obtained by carrying out the same method as that of the example 1. Thereafter the obtained positive electrode and the negative electrode used in the example 1 were combined with each other to produce a 3.7V-700mAh lithium battery by carrying out the same method as that of the example 1.

### EXAMPLE 3

95 parts by mass of the positive electrode active material powder used in the example 2 and five parts by mass of the hydrophilized conductive material used in the example 2 were dispersed in a water emulsion solution containing the polyvinylidene fluoride powder (three parts by mass of polyvinylidene fluoride was contained). After the mixed powder was collected and dried at 100 degrees C, the mixed powder was calcined at 370 degrees C to form a complex. The complex was pulverized to obtain a positive electrode material coated with the AlF₃ having an average diameter of 10µm and the fluorocarbon which impart conductivity to the positive electrode active material.

### COMPARATIVE EXAMPLE 1

Except that the positive and negative electrodes and the hydrophilized conductive material used in the example 1 were used without subjecting the positive and negative electrodes and the conductive material to combining processing, a 3.7V-700mAh lithium battery was produced by carrying out the same method as that of the example 1.

By using the obtained batteries of the example 1 and the comparative example 1, the DC resistances (DCR) of the batteries were compared with one another as described below. After the state of charge (SOC) was so adjusted to 50%, the DC resistances (DCR) of the batteries were calculated by using a least-square method when the batteries were charged and discharged, based on a discharge I-V characteristic obtained by plotting voltage drops from open circuit voltages when different discharge currents were applied to the batteries and a charge I-V characteristic obtained by plotting voltage rises from the open circuit voltages when different charge currents are applied to the batteries. Table 1 shows measured results.

**Table 1**

| | Discharge DCR(mΩ) | Charge DCR(mQ) |
|---|---|---|
| Example 1 | 43.1 | 43.5 |
| Example 2 | 46.3 | 47.2 |
| Example 3 | 48.8 | 49.1 |
| Comparative example 1 | 54.2 | 55.6 |

By using the batteries, capacity retention rates with respect to initial capacities after the lapse of 1000 cycles, 3000 cycles, and 5000 cycles were calculated by repeating a discharge condition where a constant electric current of 51tA and a voltage of 3.0 were applied to the batteries and a final voltage was cut and a charge condition where a constant voltage of 4.2 (constant electric current of 51tA was limited) was applied to the batteries and charging finished when 0.051tA was detected.

**Table 2**

| | Initial capacity ratio (%) | Capacity retention rate (%) | | |
|---|---|---|---|---|
| | | After 1000 cycles | After 3000 cycles | After 5000 cycles |
| Example 1 | 100 | 99.2 | 98.3 | 97.6 |
| Example 2 | 100 | 99.1 | 97.5 | 96.9 |
| Example 3 | 100 | 99.1 | 97.3 | 95.4 |
| Comparative example 1 | 100 | 97.5 | 91.2 | 81.8 |

The results shown in table indicate that the DC resistances of the batteries of the examples 1, 2, and 3 were lower than that of the comparative example 1. As possible reasons, the positive electrode material consisting of Li (Ni/Mn/Co) O₂ was combined with the conductive material to form the electrode material for use in the positive electrode owing to bonds between carbon atoms. Although the above-described effect appeared in the example 3, the production method of the example 3 is a little inferior to those of the example 1 and 2. The DC resistance of the battery of the example 3 was higher than those of the batteries of the examples 1 and 2 . Conceivably, this is attributed to the influence of oxidation to a small extent in the case of the binder dispersed in the aqueous solution while the calcining temperature was rising. The above-described effect allowed the energy densities of the batteries of the examples 1, 2, and 3 to be maintained high at the cycle time. Regarding the cycle life shown in table 2, the batteries of the examples 1, 2, and 3 maintained a high-energy density respectively after the lapse of 5000 cycles. As in the case of the test result of the DC resistance, the energy density of the battery of the example 3 was a little lower than those of the batteries of the examples 1 and 2. From the above, because the battery of the present invention has a low DC resistance at charge and discharge times, the battery is capable of showing a large capacity (allowed to have high-energy density) in large current charge and discharge. In addition, at a charge and discharge cycle time, the positive and negative electrode active substances were prevented from expanding and contracting. In addition, because the combination between the conductive material and negative electrode active substance was maintained, the low resistance was maintained. On the other hand, as possible reasons, although the conductive material of the battery of the comparative example 1 was the same as those of the examples in the kind and amount thereof, the state of contact between the conductive material and the positive and negative electrode active materials changed owing to the expansion and contraction of the positive and negative electrode active substances. As a result, the contact point therebetween was out of place, which caused the resistance of the battery of the comparative example 1 to be increased. Consequently the capacity of the battery could not be maintained.

In the combining method of the present invention, it is possible to use the positive electrode active materials consisting of layered compounds such as Li(Ni/Mn/Co)O₂, the spinel type electrode active material, the olivine type positive electrode active material, and mixtures of Li(Ni/Mn/Co)O₂ and these electrode active materials for the carbon-based conductive material. Further the combining method of the present invention allows the negative electrode material to be formed by combining the negative electrode active substance and the carbon-based conductive material with one another and produces effects similar to those of the positive electrode material. The combiningmethod of the present invention is applicable not only to the formation of the electrode material for the lithium battery, but also to the formation of a positive electrode material of a lithium ion capacitor and the formation of the combination between a negative electrode activated carbon and various conductive materials.

### INDUSTRIAL APPLICABILITY

The electrode material of the present invention for the lithium battery has a high-energy density and a high output and is capable of maintaining the properties for many years in spite of repeated charges and discharges. Thus the electrode material is applicable to industrial batteries for cars and the like.

### EXPLANATION OF REFERENCE SYMBOLS AND NUMERALS

- 1:: conductive carbon powder
- 2:: conductive carbon powder subjected to hydrophilic treatment
- 3:: conductive carbon fiber
- 4:: conductive carbon fiber subjected to hydrophilic treatment
- 5:: untreated positive electrode active material
- 6:: surface layer
- 7:: electrode active material whose surface is conductive

## Claims

1. An electrode material, for use in positive and negative electrodes of a lithium secondary battery, comprising a complex of a carbon-based conductive material and an electrode active material including a surface layer comprising metal fluorides and/ or fluorocarbons,
wherein said carbon-based conductive material is one that has been subjected to hydrophilic treatment by using a gas containing fluorine gas; and
said complex is obtainable by calcining a mixture of said carbon-based conductive material subjected to said hydrophilic treatment and said electrode active material in the presence of a fluororesin.

2. An electrode material according to claim 1, wherein said electrode material comprises electrode active material for use in a positive electrode, wherein said electrode active material is formed as a result of calcining a mixture of said fluororesin, an untreated electrode active material, and a metal oxide or a compound generated from said metal oxide at a temperature not less than a temperature at which said fluororesin melts and starts thermal decomposition and at a temperature not more than a temperature at which said electrode active material does not thermally decompose.

3. An electrode material according to claim 2, wherein said electrode material is for use in a positive electrode and is formed as a complex as a result of calcining a mixture of said carbon-based conductive material subjected to said hydrophilic treatment and said electrode active material formed by said calcining treatment at said temperature not less than said temperature at which said fluororesin melts and starts thermal decomposition and at said temperature not more than said temperature at which said electrode active material does not thermally decompose.

4. An electrode material according to claim 1, wherein said complex is a result of calcining a mixture of said carbon-based conductive material subjected to said hydrophilic treatment, said fluororesin, an untreated electrode active material, and a metal oxide or a compound generated from said metal oxide at said temperature not less than said temperature at which said fluororesin melts and starts thermal decomposition and at said temperature not more than said temperature at which said electrode active material does not thermally decompose.

5. An electrode material according to claim 2, 3 or 4, wherein metals contained in said metal oxide or said compound generated from said metal oxide are aluminum, molybdenum, titanium or zirconium.

6. An electrode material according to claim 2, 3 or 4, wherein a positive electrode active material to be used for said positive electrode is at least one lithium compound selected from among α-layered Li(Ni_{α}/Mn_{β}/Co_{γ})O₂(α+β+γ=1), spinel-type LiNi_{δ}Mn_{ε}O₄(δ+ε=2), olivine-type Li(Fe_{ζ}/Co_{η}/Mn_{θ})PO₄(ζ+η+θ=1), Li₂(Fe_{ζ}/Co_{η}/Mn_{θ})PO₄F (ζ+η+θ=1), and Li(Fe_{ζ}/Co_{η}/Mn_{θ})SiO₄(ζ+η+θ=1).

7. An electrode material according to claim 6, wherein said positive electrode active material to be used for said positive electrode is a mixture of a first lithium compound which is at least one lithium compound selected from among said α-layered Li(Ni_{α}/Mn_{β}/Co_{γ})O₂(α+β+γ=1) and said spinel-type LiNi_{δ}Mn_{ε}O₄(δ+ε=2) and a second lithium compound which is at least one lithium compound selected from among said olivine-type Li(Fe_{ζ}/Co_{η}/Mn_{θ})PO₄(+η+θ=1), said olivine-type Li₂(Fe_{ζ}/Co_{η}/Mn_{θ})PO₄F (ζ+η+θ=1), and said olivine-type Li(Fe_{ζ}/Co_{η}/Mn_{θ})SiO₄(ζ+η+θ=1).

8. An electrode material according to any one preceding claim, wherein the electrode material is for a negative electrode and the active substances used for said negative electrode are graphite, said graphite having an amorphous carbon material layer or a carbon material layer, having a graphene structure, which is present on a surface thereof, said graphite to which SiOₓ or SnOₓ has been added, and lithium titanate compounds.

9. An electrode material according to claim 8, wherein said complex is a result of calcining raw materials at not less than 600 degrees C.

10. An electrode material according to any one preceding claim, wherein said carbon-based conductive material is at least one carbon-based conductive material selected from among conductive carbon powder and conductive carbon fiber.

11. An electrode material according to any one preceding claim, wherein said gas containing said fluorine gas contains said fluorine gas and oxygen gas.

12. An electrode material according to any one preceding claim, wherein said fluororesin is polyvinylidene fluoride resin.

13. A method of producing an electrode material for a lithium secondary battery according to any one preceding claim, which is formed as a complex by combining a carbon-based conductive material and an electrode active material with each other to use said electrode material for positive and negative electrodes of a lithium battery,
said method comprising:
a step of subjecting said carbon-based conductive material to hydrophilic treatment with said carbon-based conductive material in contact with a gas containing fluorine gas,
a step of mixing an electrode active material, said carbon-based conductive material subjected to said hydrophilic treatment, and fluororesin with one another, and
a step of calcining said mixture.

14. A method of producing an electrode material according to claim 13, wherein in forming an electrode material for use in said positive electrode, said mixing step is performed to mix a mixture of said carbon-based conductive material subjected to said hydrophilic treatment, said electrode active material, said fluororesin, and a metal oxide or a compound generated from said metal oxide with one another; and said calcining step is performed to calcine said mixture at a temperature not less than a temperature at which said fluororesin melts and at a temperature not more than a temperature at which said positive electrode active material does not thermally decompose.

15. A method of producing an electrode material according to claim 13 or 14, wherein said mixing step is performed in a presence of water or an organic solvent; and said calcining step is performed after said mixture is dried, or said mixing step and said calcining step are performed in an absence of a solvent.

16. A method of claim 13, 14 or 15, wherein before said step of calcining the mixture of carbon-based material and electrode active material, the electrode active material is first treated by calcining in the presence of a fluororesin and a metal oxide at a temperature not less that the temperature at which the fluororesin melts and starts thermal decomposition and at the temperature not more than the temperature at which the electrode active material 5 does not thermally decompose.

17. A lithium secondary battery which repeatedly occludes and releases lithium ions by permeating an organic electrolytic solution into a group of electrodes wound or laminated one upon another between a positive electrode and a negative electrode via a separator or by immersing said group of electrodes in said organic electrolytic solution,
wherein electrode materials composing said positive electrode and said negative electrode are electrode materials according to any one of claims 1 through 12.

## Patentansprüche

1. Elektrodenmaterial zur Verwendung in positiven und negativen Elektroden einer Lithiumsekundärbatterie, umfassend einen Komplex aus einem kohlenstoffbasierten leitfähigen Material und einem aktiven Elektrodenmaterial, das eine Oberflächenschicht beinhaltet, die Metallfluoride und/oder Fluorkohlenstoffe umfasst,
wobei das kohlenstoffbasierte leitfähige Material eines ist, das einer hydrophilen Behandlung unter Verwendung eines fluorgashaltigen Gases unterzogen wurde; und
der Komplex durch Kalzinieren einer Mischung des kohlenstoffbasierten leitfähigen Materials, das der hydrophilen Behandlung unterzogen wurde, und des aktiven Elektrodenmaterials in Gegenwart eines Fluorharzes erhältlich ist.

2. Elektrodenmaterial nach Anspruch 1, wobei das Elektrodenmaterial aktives Elektrodenmaterial zur Verwendung in einer positiven Elektrode umfasst, wobei das aktive Elektrodenmaterial als Ergebnis vom Kalzinieren einer Mischung des Fluorharzes, eines unbehandelten aktiven Elektrodenmaterials und eines Metalloxids oder einer Verbindung, die aus dem Metalloxid erzeugt wurde, bei einer Temperatur, die nicht geringer als eine Temperatur ist, bei der das Fluorharz schmilzt und mit thermischer Zersetzung beginnt, und bei einer Temperatur, die nicht höher als eine Temperatur ist, bei der sich das aktive Elektrodenmaterial nicht thermisch zersetzt, gebildet wird.

3. Elektrodenmaterial nach Anspruch 2, wobei das Elektrodenmaterial zur Verwendung in einer positiven Elektrode vorgesehen ist und als Ergebnis vom Kalzinieren einer Mischung des kohlenstoffbasierten leitfähigen Materials, das der hydrophilen Behandlung unterzogen wurde, und des aktiven Elektrodenmaterials, das durch die Kalzinierungsbehandlung gebildet wurde, bei der Temperatur, die nicht geringer als die Temperatur ist, bei der das Fluorharz schmilzt und mit thermischer Zersetzung beginnt, und bei der Temperatur, die nicht höher als die Temperatur ist, bei der sich das aktive Elektrodenmaterial nicht thermisch zersetzt, als Komplex gebildet wird.

4. Elektrodenmaterial nach Anspruch 1, wobei der Komplex ein Ergebnis des Kalzinierens einer Mischung des kohlenstoffbasierten leitfähigen Materials, das der hydrophilen Behandlung unterzogen wurde, des Fluorharzes, eines unbehandelten aktiven Elektrodenmaterials und eines Metalloxids oder einer Verbindung, die aus dem Metalloxid erzeugt wurde, bei der Temperatur, die nicht geringer als die Temperatur ist, bei der das Fluorharz schmilzt und mit thermischer Zersetzung beginnt, und bei der Temperatur, die nicht höher als die Temperatur ist, bei der sich das aktive Elektrodenmaterial nicht thermisch zersetzt, ist.

5. Elektrodenmaterial nach Anspruch 2, 3 oder 4, wobei Metalle, die in dem Metalloxid oder der Verbindung, die aus dem Metalloxid erzeugt wurde, enthalten sind, Aluminium, Molybdän, Titan oder Zirkonium sind.

6. Elektrodenmaterial nach Anspruch 2, 3 oder 4, wobei ein aktives Material der positiven Elektrode, das für die positive Elektrode zu verwenden ist, zumindest eine Lithiumverbindung ist, die aus α-geschichtetem Li(Ni_{α}/Mn_{β}/Co_{γ})O₂ (α + β + γ = 1), LiNi_{δ}Mn_{ε}O₄ (δ + ε = 2) vom Spinelltyp, Li(Fe_{ζ}/Co_{η}/Mn_{θ})PO₄ (ζ + η + θ = 1) vom Olivintyp, Li₂(Fe_{ζ}/Co_{η}(Mn_{θ})PO₄F (ζ + η + θ = 1) vom Olivintyp und Li(Fe_{ζ}/Co_{η}/Mn_{θ})SiO₄ (ζ + η + θ = 1) vom Olivintyp ausgewählt ist.

7. Elektrodenmaterial nach Anspruch 6, wobei des aktive Material der positiven Elektrode, das für die positive Elektrode zu verwenden ist, eine Mischung aus einer ersten Lithiumverbindung, die zumindest eine Lithiumverbindung ist, die aus dem α-geschichteten Li(Ni_{α}/Mn_{β}/Co_{γ})O₂ (α + β + γ = 1) und dem LiNi_{δ}Mn_{ε}O₄ (δ + ε = 2) vom Spinelltyp ausgewählt ist, und einer zweiten Lithiumverbindung, die zumindest eine Lithiumverbindung ist, die aus dem Li(Fe_{ζ}/Co_{η}/Mn_{θ})PO₄ (ζ + η + θ = 1) vom Olivintyp, Li₂(Fe_{ζ}/Co_{η}(Mn_{θ})PO₄F (ζ + η + θ = 1) vom Olivintyp und Li(Fe_{ζ}/Co_{η}/Mn_{θ})SiO₄ (ζ + η + θ = 1) vom Olivintyp ausgewählt ist, ist.

8. Elektrodenmaterial nach einem vorstehenden Anspruch, wobei das Elektrodenmaterial für eine negative Elektrode vorgesehen ist und die Aktivsubstanzen, die für die negative Elektrode verwendet werden, Graphit, wobei der Graphit eine Schicht aus amorphem Kohlenstoffmaterial oder eine Kohlenstoffmaterialschicht aufweist, mit einer Graphenstruktur, die auf einer Oberfläche davon vorhanden ist, der Graphit, zu dem SiOₓ oder SnOₓ addiert wurde, und Lithiumtitanatverbindungen sind.

9. Elektrodenmaterial nach Anspruch 8, wobei der Komplex ein Ergebnis des Kalzinierens von Rohmaterialien bei nicht weniger als 600 Grad Celsius ist.

10. Elektrodenmaterial nach einem vorstehenden Anspruch, wobei das kohlenstoffbasierte leitfähige Material zumindest ein kohlenstoffbasiertes leitfähiges Material ist, das aus leitfähigem Kohlenstoffpulver und leitfähiger Kohlenstofffaser ausgewählt ist.

11. Elektrodenmaterial nach einem vorstehenden Anspruch, wobei das Gas, das das Fluorgas enthält, das Fluorgas und Sauerstoffgas enthält.

12. Elektrodenmaterial nach einem vorstehenden Anspruch, wobei das Fluorharz Polyvinylidenfluoridharz ist.

13. Verfahren zum Herstellen eines Elektrodenmaterials für eine Lithiumsekundärbatterie nach einem vorstehenden Anspruch, das als Komplex durch Kombinieren eines kohlenstoffbasierten leitfähigen Materials und eines aktiven Elektrodenmaterials miteinander gebildet wird, um das Elektrodenmaterial für positive und negative Elektroden einer Lithiumbatterie zu verwenden,
wobei das Verfahren umfasst:
einen Schritt des Unterziehens des kohlenstoffbasierten leitfähigen Materials einer hydrophilen Behandlung, wobei das kohlenstoffbasierte leitfähige Material mit einem fluorgashaltigen Gas in Kontakt gelangt,
einen Schritt des Mischens des unbehandelten aktiven Elektrodenmaterials, des kohlenstoffbasierten leitfähigen Materials, das der hydrophilen Behandlung unterzogen wurde, und des Fluorharzes miteinander, und
einen Schritt des Kalzinierens der Mischung.

14. Verfahren zum Herstellen eines Elektrodenmaterials nach Anspruch 13, wobei der Mischschritt beim Bilden eines Elektrodenmaterials zur Verwendung in der positiven Elektrode durchgeführt wird, um eine Mischung des kohlenstoffbasierten leitfähigen Materials, das der hydrophilen Behandlung unterzogen wurde, des aktiven Elektrodenmaterials, des Fluorharzes und eines Metalloxids oder einer Verbindung, die aus dem Metalloxid erzeugt wurde, miteinander zu vermischen; und der Kalzinierungsschritt durchgeführt wird, um die Mischung bei einer Temperatur, die nicht geringer als eine Temperatur ist, bei der das Fluorharz schmilzt, und bei einer Temperatur, die nicht höher als eine Temperatur ist, bei der sich das aktive Material der positiven Elektrode nicht thermisch zersetzt, zu kalzinieren.

15. Verfahren zum Herstellen eines Elektrodenmaterials nach Anspruch 13 oder 14, wobei der Mischschritt in Gegenwart von Wasser oder eines organischen Lösungsmittels durchgeführt wird; und der Kalzinierungsschritt nach Trocknen der Mischung durchgeführt wird oder der Mischschritt und der Kalzinierungsschritt in Abwesenheit eines Lösungsmittels durchgeführt werden.

16. Verfahren nach Anspruch 13, 14 oder 15, wobei das aktive Elektrodenmaterial vor dem Schritt des Kalzinierens der Mischung von kohlenstoffbasiertem Material und aktivem Elektrodenmaterial zunächst durch Kalzinieren in Gegenwart eines Fluorharzes und eines Metalloxids bei einer Temperatur, die nicht geringer als die Temperatur ist, bei der das Fluorharz schmilzt und mit thermischer Zersetzung beginnt, und bei der Temperatur, die nicht höher als die Temperatur ist, bei der sich das aktive Elektrodenmaterial 5 nicht thermisch zersetzt, behandelt wird.

17. Lithiumsekundärbatterie, die Lithiumionen wiederholt einschließt und freigibt, durch Permeieren einer organischen elektrolytischen Lösung in eine Gruppe von Elektroden, die übereinander gewickelt oder laminiert sind, zwischen einer positiven Elektrode und einer negativen Elektrode über einen Separator oder durch Eintauchen der Gruppe von Elektroden in die organische elektrolytische Lösung,
wobei Elektrodenmaterialien, die die positive Elektrode und die negative Elektrode bilden, Elektrodenmaterialien nach einem der Ansprüche 1 bis 12 sind.

## Revendications

1. Matériau d'électrode, à utiliser dans des électrodes positives et négatives d'une batterie secondaire au lithium, comprenant un complexe d'un matériau conducteur à base de carbone, et d'un matériau actif d'électrode incluant une couche de surface comprenant des fluorures métalliques et/ou des fluorocarbones,
dans lequel ledit matériau conducteur à base de carbone est un matériau qui a été soumis à un traitement hydrophile en utilisant un gaz contenant un gaz fluor ; et
ledit complexe peut être obtenu en calcinant un mélange dudit matériau conducteur à base de carbone soumis audit traitement hydrophile et dudit matériau actif d'électrode en présence d'une fluororésine.

2. Matériau d'électrode selon la revendication 1, dans lequel ledit matériau d'électrode comprend un matériau actif d'électrode à utiliser dans une électrode positive, dans lequel ledit matériau actif d'électrode est formé suite à la calcination d'un mélange de ladite fluororésine, d'un matériau actif d'électrode non traité, et d'un oxyde de métal ou d'un composé généré à partir dudit oxyde métallique à une température au moins égale à une température à laquelle fond ladite fluororésine et à laquelle débute la décomposition thermique et à une température ne dépassant pas celle à laquelle ledit matériau actif d'électrode ne se décompose pas thermiquement.

3. Matériau d'électrode selon la revendication 2, dans lequel ledit matériau d'électrode est destiné à être utilisé dans une électrode positive et est formé comme un complexe suite à la calcination d'un mélange dudit matériau conducteur à base de carbone soumis audit traitement hydrophile et dudit matériau actif d'électrode formé par ledit traitement de calcination à ladite température non inférieure à ladite température à laquelle fond ladite fluororésine et à laquelle débute la décomposition thermique et à ladite température ne dépassant pas celle à laquelle ledit matériau actif d'électrode ne se décompose pas thermiquement.

4. Matériau d'électrode selon la revendication 1, dans lequel ledit complexe est le résultat de la calcination d'un mélange dudit matériau conducteur à base de carbone soumis audit traitement hydrophile, de ladite fluororésine, d'un matériau actif d'électrode non traité, et d'un oxyde métallique ou d'un composé généré à partir dudit oxyde métallique à ladite température non inférieure à ladite température à laquelle fond ladite fluororésine et à laquelle débute la décomposition thermique et à ladite température ne dépassant pas celle à laquelle ledit matériau actif d'électrode ne se décompose pas thermiquement.

5. Matériau d'électrode selon la revendication 2, 3 ou 4, dans lequel des métaux contenus dans ledit oxyde métallique ou ledit composé généré à partir dudit oxyde métallique sont l'aluminium, le molybdène, le titane ou le zirconium.

6. Matériau d'électrode selon la revendication 2, 3 ou 4, dans lequel un matériau actif d'électrode positive à utiliser pour ladite électrode positive est au moins un composé lithium choisi parmi le Li(Ni_{α}/Mn_{β}/Co_{γ})O₂(α + β + γ = 1) à couche α, le LiNi_{δ}Mn_{ε}O₄(δ + ε = 2) de type spinelle, le Li(Fe_{ζ}/Co_{η}/Mn_{θ})PO₄(ζ + η + θ = 1), le Li₂(Fe_{ζ}/Co_{η}/Mn_{θ})PO₄F(ζ + η + θ = 1), et Li(Fe_{ζ}/Co_{η}/Mn_{θ})SiO₄(ζ + η + θ = 1) de type olivine.

7. Matériau d'électrode selon la revendication 6, dans lequel ledit matériau actif d'électrode positive à utiliser pour ladite électrode positive est un mélange d'un premier composé lithium qui est au moins un composé lithium choisi parmi lesdits Li(Ni_{α}/Mn_{β}/Co_{γ})O₂(α + β + γ= 1) à couche a, le LiNi_{δ}Mn_{ε}O₄(δ + ε = 2) de type spinelle, et un second composé lithium qui est au moins un composé lithium choisi parmi lesdits Li(Fe_{ζ}/Co_{η}/Mn_{θ})PO₄(ζ + η + θ = 1) de type olivine, le Li₂(Fe_{ζ}/Co_{η}/Mn_{θ})PO₄F(ζ + η + θ = 1) de type olivine, et Li(Fe_{ζ}/Co_{η}/Mn_{θ})SiO₄(ζ + η + θ = 1) de type olivine.

8. Matériau d'électrode selon l'une quelconque des revendications précédentes, dans lequel le matériau d'électrode est destiné à une électrode négative et les substances actives utilisées pour ladite électrode négative sont un graphite, ledit graphite présentant une couche de matériau carbone amorphe ou une couche de matériau carbone, ayant une structure graphène, qui est présente sur une surface correspondante, ledit graphite auquel du SiOₓ ou du SnOₓ a été ajouté, et des composés titanate de lithium.

9. Matériau d'électrode selon la revendication 8, dans lequel ledit complexe est un résultat de la calcination de matières premières à au moins 600 degrés C.

10. Matériau d'électrode selon l'une quelconque des revendications précédentes, dans lequel ledit matériau conducteur à base de carbone est au moins un matériau conducteur à base de carbone choisi parmi une poudre de carbone conductrice et une fibre de carbone conductrice.

11. Matériau d'électrode selon l'une quelconque des revendications précédentes, dans lequel ledit gaz contenant ledit gaz fluor contient ledit gaz fluor et un gaz oxygène.

12. Matériau d'électrode selon l'une quelconque des revendications précédentes, dans lequel ladite fluororésine est une résine de polyvinylidène fluorure.

13. Procédé de production d'un matériau d'électrode pour une batterie secondaire au lithium selon l'une quelconque des revendications précédentes, qui est formé comme un complexe en combinant un matériau conducteur à base de carbone et un matériau actif d'électrode l'un avec l'autre permettant d'utiliser ledit matériau d'électrode pour des électrodes positives et négatives d'une batterie au lithium,
ledit procédé comprenant :
une étape consistant à soumettre ledit matériau conducteur à base de carbone à un traitement hydrophile avec ledit matériau conducteur à base de carbone en contact avec un gaz contenant un gaz fluor,
une étape consistant à mélanger un matériau actif d'électrode, ledit matériau conducteur à base de carbone soumis audit traitement hydrophile et une fluororésine les uns avec les autres, et
une étape consistant à calciner ledit mélange.

14. Procédé de production d'un matériau d'électrode selon la revendication 13, dans lequel dans la formation d'un matériau d'électrode à utiliser dans ladite électrode positive, ladite étape de mélange est réalisée afin de mélanger un mélange dudit matériau conducteur à base de carbone soumis audit traitement hydrophile, dudit matériau actif d'électrode, de ladite fluororésine, et d'un oxyde métallique ou d'un composé généré à partir dudit oxyde métallique les uns avec les autres ; et ladite étape de calcination est réalisée afin de calciner ledit mélange à une température au moins égale à une température à laquelle fond ladite fluororésine et à une température ne dépassant pas celle à laquelle ledit matériau actif d'électrode positive ne se décompose pas thermiquement.

15. Procédé de production d'un matériau d'électrode selon la revendication 13 ou 14, dans lequel ladite étape de mélange est réalisée en présence d'eau ou d'un solvant organique ; et ladite étape de calcination est réalisée après le séchage dudit mélange, ou ladite étape de mélange et ladite étape de calcination sont réalisées en l'absence de solvant.

16. Procédé selon la revendication 13, 14 ou 15, dans lequel, avant ladite étape de calcination du mélange du matériau à base de carbone et du matériau actif d'électrode, le matériau actif d'électrode est tout d'abord traité par calcination en présence d'une fluororésine et d'un oxyde métallique à une température au moins égale à la température à laquelle fond la fluororésine et à laquelle débute la décomposition thermique et à la température ne dépassant pas celle à laquelle le matériau actif d'électrode 5 ne se décompose pas thermiquement.

17. Batterie secondaire au lithium qui bloque et relâche de manière répétée des ions lithium par perméation d'une solution électrolytique organique en un groupe d'électrodes enveloppées ou stratifiées les unes sur les autres entre une électrode positive et une électrode négative, via un séparateur ou en immergeant ledit groupe d'électrodes dans ladite solution électrolytique organique,
dans laquelle les matériaux d'électrode composant ladite électrode positive et ladite électrode négative sont des matériaux d'électrode selon l'une quelconque des revendications 1 à 12.
